# DEMANDE DE BREVET EUROPEEN

(11) **EP 2 019 210 A1**
(43) Date de publication de la demande: **28.01.2009**
(21) Numéro de dépôt: 07290938.5
(22) Date de dépôt: 25.07.2007
(51) Int. Cl.: F16B 2/00, F16B 33/00, F16B 35/04

(54) **Dispositif de fixation du type à vis en matière plastique et écrou**

(71) Demandeur: Lisi Automotive Rapid, 95650 Puiseux Pontoise (FR)
(72) Inventeur: Marcel, Gilles, 95660 Champagne Sur Oise (FR); Viennois, Fabien, 92800 Puteaux (FR)
(74) Mandataire: Berger, Helmut

(57) **Abrégé**

L'invention concerne un dispositif de fixation sur un support tel qu'une tôle (15), du type comprenant une vis (A) en matière plastique comprenant une partie filetée (1) et une partie de tête (2) munie d'un moyen de serrage (3) de la vis ainsi qu'un écrou (B) adapté pour être vissé sur la partie filetée (1).
Le dispositif est caractérisé en ce que la vis comporte entre sa partie filetée (1) et la face d'appui (9) sur le support, sous la tête (2), une partie conique (17) de raccordement dont le diamètre augmente en direction de la face d'appui (9).
L'invention est utilisable pour la fixation d'une pièce sur un support.

## Description

L'invention concerne un dispositif de fixation sur un support tel qu'une tôle, du type comprenant une vis en matière plastique comprenant une partie filetée et une partie de tête munie d'un moyen de serrage de la vis ainsi qu'un écrou adapté pour être vissé sur la partie filetée.

Les dispositifs de ce type, qui sont connus, présentent l'inconvénient majeur que les vis ne sont pas suffisamment résistantes à des couples de serrage importants.

L'invention a pour but de pallier cet inconvénient.

Pour atteindre ce but, une vis selon l'invention est **caractérisée en ce que** la vis comporte entre la partie filetée et la face d'appui sous la tête une partie conique de raccordement dont le diamètre augmente en direction de la face d'appui.

Selon une caractéristique avantageuse de l'invention, le dispositif de fixation est caractérisé en ce que la face d'appui comprend des moyens d'augmentation du coefficient de frottement sur le support.

Selon une autre caractéristique avantageuse de l'invention, le dispositif de fixation est caractérisé en ce que les moyens précités sont des éléments en saillie de la face d'appui, tels que des pivots, moletage, grainage et nervures à angle aigu.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'une vis à pas métrique, en matière plastique, selon l'invention ;
- la figure 2 est une vue latérale de la figure 1 ;
- la figure 3 est une vue à plus grande échelle de la partie indiquée en III sur la figure 2 ; et
- la figure 4 est une vue en coupe le long de la ligne IV-IV de la figure 2.

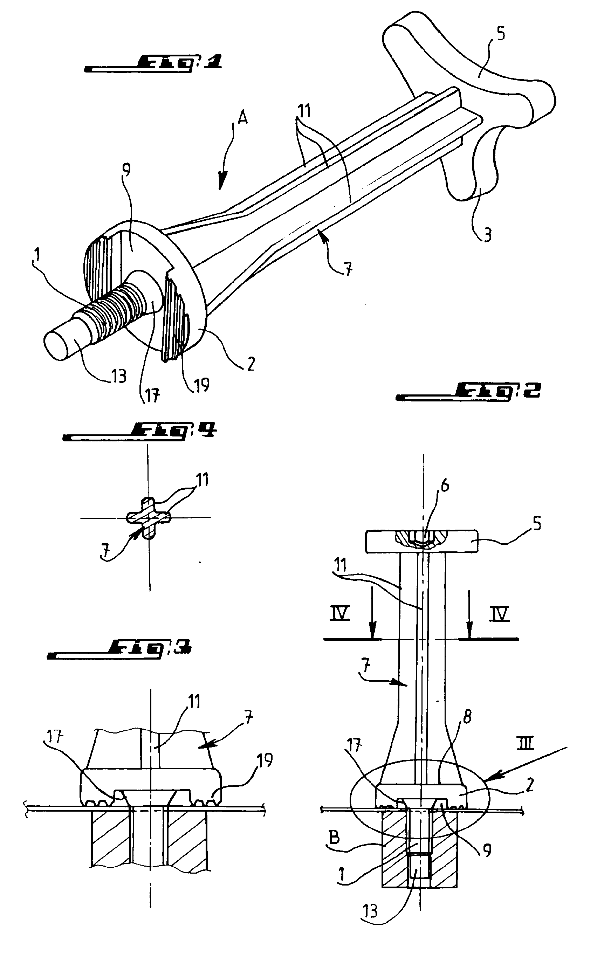

La figure 1 montre, à titre d'exemple, une vis à pas métrique selon l'invention qui est susceptible d'être fabriquée en matière plastique, avantageusement par injection et est configurée de façon à résister à des couples de serrage importants.

La vis désignée par la référence générale A comprend essentiellement une partie filetée 1 et une partie de tête 2 pourvue de moyens de serrage 3. Ces moyens comportent une extrémité d'actionnement 5, dans l'exemple représenté de forme générale triangulaire pour permettre un serrage manuel, avec dans son centre une empreinte 6 d'engagement d'une clé de serrage, ainsi qu'une tige 7 de raccordement à la face arrière 8 de la tête 2, qui est opposée à la face avant 9 à laquelle est raccordée la partie filetée 1.

La tête 2 est réalisée sous forme d'un plateau circulaire dont les faces avant 9 et arrière 8 sont parallèles. Pour permettre la transmission de forces de serrage importantes, la tige 7 présente une section transversale en forme d'une croix, comportant des ailes 11 dont la hauteur augmente en direction de la tête 2, au moins dans la zone proche de celle-ci. Il est encore à noter que la partie filetée 1 se termine par un embout lisse 13.

Comme le montrent les figures 2 et 3, dans l'exemple représenté, la face avant 9 de la tête 2 de la vis A est destinée à venir en appui serré contre une face d'un support tel qu'une tôle 15 contre l'autre face duquel est serré un écrou B vissé sur la partie filetée 1 de la vis. L'élément à fixer au support pourrait être surmoulé sur l'écrou ou être une pièce séparée interposée entre le support 15 et l'écrou.

Lors d'un serrage d'une vis telle que décrite ci-avant, le couple se répartit en plusieurs composantes, à savoir une composante de frottement au niveau de la face avant 9 de la tête, une composante de frottement dans les filets de la partie filetée 1 et une composante de couple qui donne la tension. Or, lorsque le couple de serrage devient important, la partie filetée 1 casse au niveau de son raccordement à la tête 2.

Pour éliminer ce risque, une vis selon l'invention comprend une zone de raccordement conique 17 dont le diamètre augmente en direction de la face avant 9 de la tête sur une longueur prédéterminée. Le cône de raccordement 17 entre la partie filetée 1 et la face d'appui 9 sous la tête permet de diminuer la concentration des contraintes mécaniques dans la zone de raccordement de la partie filetée à la tête.

Selon une autre caractéristique avantageuse de l'invention, la face avant 9 de la tête comporte des éléments d'appui en saillie 19, qui ont pour fonction d'augmenter le coefficient de frottement de la face avant 9. Ceci a pour effet d'accroître les pertes de couple sous la tête et donc de diminuer les efforts sur la partie filetée 1. Les éléments en saillie peuvent être de toute forme appropriée, par exemple du type picot, moletage, grainage, nervure à angle aigu ou analogue. Grâce à ces éléments en saillie 19, la vis peut résister à un couple de serrage encore supérieur.

Une vis selon l'invention présente de nombreux avantages qui ressortent de la description qui vient d'être faite en se reportant aux figures. Ainsi, l'invention permet la réalisation d'une vis tout en plastique qui peut résister à un couple de serrage important. Les éléments en saillie de la face d'appui de la tête servent à augmenter le coefficient de frottement sous la tête. Le fait que la vis est une pièce en matière plastique permet de réaliser des vis de forme complexe.

## Revendications

1. Dispositif de fixation sur un support tel qu'une tôle, du type comprenant une vis en matière plastique comprenant une partie filetée et une partie de tête munie d'un moyen de serrage de la vis ainsi qu'un écrou adapté pour être vissé sur la partie filetée, **caractérisé en ce que** la vis comporte entre sa partie filetée (1) et la face d'appui (9) sur le support, sous la tête (2), une partie conique (17) de raccordement dont le diamètre augmente en direction de la face d'appui (9).

2. Dispositif de fixation selon la revendication 1, **caractérisé en ce que** la face d'appui (9) comprend des moyens (19) d'augmentation du coefficient de frottement sur le support.

3. Dispositif de fixation selon la revendication 2, **caractérisé en ce que** les moyens précités (19) sont des éléments en saillie de la face d'appui (9), tels que des pivots, moletage, grainage et nervures à angle aigu.
